(19) Europäisches Patentamt
European Patent Office
Office européen des brevets

(11) **EP 2 904 679 B1**

(12) **EUROPÄISCHE PATENTSCHRIFT**

(45) Veröffentlichungstag und Bekanntmachung des Hinweises auf die Patenterteilung:
**16.05.2018 Patentblatt 2018/20**

(21) Anmeldenummer: **12816023.1**

(22) Anmeldetag: **11.12.2012**

(51) Int Cl.:
*H02J 3/06* (2006.01)     *H02J 3/14* (2006.01)
*H02J 3/38* (2006.01)     *G06Q 50/06* (2012.01)

(86) Internationale Anmeldenummer:
**PCT/EP2012/075045**

(87) Internationale Veröffentlichungsnummer:
**WO 2014/090285 (19.06.2014 Gazette 2014/25)**

(54) **VERFAHREN ZUR STEUERUNG DES BETRIEBS VON ELEKTRISCHEN ENERGIEERZEUGERN UND STEUEREINRICHTUNG ZUR DURCHFÜHRUNG DES VERFAHRENS**

METHOD FOR CONTROLLING OPERATION OF ELECTRICAL ENERGY GENERATORS AND THE CONTROLLING ARRANGEMENT FOR CARRYING OUT THE METHOD

PROCÉDÉ DE CONTRÔLE DU FONCTIONNEMENT DES GÉNÉRATEURS D'ÉNERGIE ÉLECTRIQUE ET DISPOSITIF DE COMMANDE POUR LA MISE EN OEUVRE DE CE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.08.2015 Patentblatt 2015/33**

(73) Patentinhaber: **Siemens Aktiengesellschaft 80333 München (DE)**

(72) Erfinder: **PLÖTT, Norbert 91058 Erlangen (DE)**

(56) Entgegenhaltungen:
**EP-A2- 1 202 425         WO-A1-2012/048736
DE-A1-102009 040 091      US-A1- 2010 058 350**

**Beschreibung**

Die Erfindung betrifft ein Verfahren zur Steuerung des Betriebs von elektrischen Energieerzeugern, die zur Einspeisung elektrischer Energie mit einem elektrischen Energieversorgungsnetz verbunden sind und deren Betriebsweise über eine gemeinsame Steuereinrichtung gesteuert wird, wobei die Steuereinrichtung die Energieerzeuger unter Heranziehung einer festgelegten Steuerkennlinie derart steuert, dass die von den Energieerzeugern in das Versorgungsnetz eingespeiste Energie dem geplanten versorgungsnetzseitigen Energiebedarf entspricht, der Steuereinrichtung ein Korrektursignal zugeführt wird, das eine Abweichung des aktuellen versorgungsnetzseitigen Energiebedarfs von dem geplanten versorgungsnetzseitigen Energiebedarf angibt, und die Steuereinrichtung Steuersignale an die Energieerzeuger abgibt, bei deren Ermittlung das Korrektursignal herangezogen wird.

Die Erfindung betrifft auch eine entsprechend eingerichtete Steuereinrichtung zur Steuerung des Betriebs von elektrischen Energieerzeugern.

Klassisch aufgebaute elektrische Energieversorgungsnetze sind prinzipiell dazu eingerichtet, elektrische Energie von vergleichsweise wenigen zentralen Energieerzeugern, z.B. Kohlekraftwerken, zu den Endverbrauchern zu liefern. Die Übertragungsrichtung solcher Energieverteilsysteme ist im Wesentlichen konstant; ferner wird die Energieerzeugung dem - prognostizierten und/oder tatsächlichen - Energiebedarf durch die Endverbraucher angepasst.

Jüngste Entwicklungen und politische Vorgaben haben hingegen zu einer Liberalisierung des elektrischen Energiemarktes geführt. Diese bewirkt, dass seit einigen Jahren verstärkt von dezentralen Energieerzeugern, wie z.B. Windenergieanlagen, kleinen Blockheizkraftwerken, Biogasanlagen und Photovoltaikanlagen, bereitgestellte elektrische Energie in die Energieversorgungsnetze auf Mittel- oder Niederspannungsebene eingespeist wird, was einen Umbruch der bisher üblichen Übertragungsrichtung zur Folge hat. Da jeder einzelne dezentrale Energieerzeuger im Vergleich zu einem Großkraftwerk nur eine geringe Energiemenge zur Einspeisung ins Energieversorgungsnetz bereitstellen kann, werden zur vereinfachten Steuerung von dezentralen Energieerzeugern und zur effizienteren Vermarktung der durch die dezentralen Energieerzeuger bereitgestellten elektrischen Energie häufig viele Energieerzeuger mit vergleichsweise kleiner Erzeugungsleistung zusammengefasst und deren elektrische Energie als Paket verkauft. Eine solche Zusammenfassung von mehreren kleinen Energieerzeugern wird auch als "virtuelles Kraftwerk" ("virtual power plant" = VPP) bezeichnet.

Für das gesamte virtuelle Kraftwerk wird anhand von Prognosen über einen zukünftigen versorgungsnetzseitigen Energiebedarf eine Steuerkennlinie bzw. ein "Gesamtfahrplan" mit dem Netzbetreiber ausgehandelt. Dieser Gesamtfahrplan unterteilt sich aus Sicht des Betreibers des virtuellen Kraftwerks in individuelle Steuerkennlinien bzw. "Einzelfahrpläne", nach denen die Betriebsweise der einzelnen in dem virtuellen Kraftwerk zusammengefassten Energieerzeuger zu regeln ist.

Die Festlegung des Gesamtfahrplans und der Einzelfahrpläne sowie die Steuerung der Energieerzeuger zur Einhaltung des Gesamtfahrplans gegenüber dem Netzbetreiber werden mittels einer Steuereinrichtung eines Energiemanagementsystems durchgeführt. Beispielsweise bietet die Anmelderin unter dem Namen "DEMS" (Decentralized Energy Management System) eine Steuereinrichtung zum Betrieb von Energieerzeugern eines virtuellen Kraftwerks an, mit dem Energieerzeuger jeglicher Art hinsichtlich ihres jeweiligen Betriebs optimal aufeinander abgestimmt werden können. Hierzu werden die Energieerzeuger hinsichtlich energetischer, ökonomischer und ökologischer Gesichtspunkte optimal geregelt. Die über diese Steuereinrichtung angesteuerten Energieerzeuger werden unter Nutzung der individuellen Einzelfahrpläne geregelt, die üblicherweise immer am Vortag des jeweiligen Betriebs festgelegt werden und die den Betrieb der Energieerzeuger in Abhängigkeit der Zeit angeben und nach den oben genannten Gesichtspunkten optimiert sind.

Neben dem eigentlichen Verkauf der von den Energieerzeugern erzeugten elektrischen Energie bietet sich in letzter Zeit auch die Vermarktung von Kraftwerkskapazitäten für Regelenergie als Alternative für den Betreiber eines virtuellen Kraftwerks an. Als Regelenergie wird diejenige elektrische Energie bezeichnet, die von den Betreibern elektrischer Energieerzeuger zum Ausgleich kurzfristiger Abweichungen der tatsächlich versorgungsnetzseitig benötigten Energiemenge von der geplanten versorgungsnetzseitig benötigten Energiemenge vorgehalten werden. Regelenergie kann hierbei positiv oder negativ sein, je nachdem, ob der versorgungsnetzseitige Bedarf im Vergleich zum geplanten Bedarf höher oder niedriger ausfällt.

In diesem Fall wird der Betreiber des virtuellen Kraftwerks einerseits dafür bezahlt, dass er elektrische Energie auf Abruf bereit hält (die, wenn der versorgungsnetzseitige Bedarf dem Fahrplan entspricht, gar nicht abgerufen wird). Andererseits erhält er eine zusätzliche Vergütung für die tatsächlich vom Netzbetreiber kurzfristig abgerufene Regelenergie.

Über den Abruf von Regelenergie entscheidet der Netzbetreiber. Wenn er Regelenergie abruft, besteht üblicherweise der Anspruch, dass die Steuerung des virtuellen Kraftwerks innerhalb von wenigen Sekunden reagiert, und dass die angeforderte Energie innerhalb von wenigen Minuten tatsächlich in vollem Umfang eingespeist wird. Zur Anforderung von Regelenergie erzeugt der Netzbetreiber ein Korrektursignal, das eine Abweichung des aktuellen versorgungsnetzseitigen Energiebedarfs von dem geplanten versorgungsnetzseitigen Energiebedarf angibt, und das an die Steuereinrichtung des virtuellen Kraftwerks übermittelt wird.

Das Einspeisen von Regelenergie ist folglich ein Vorgang, der dem "normalen" Gesamtfahrplan überlagert ist und innerhalb eines kurzen Zeithorizontes ausgeführt werden muss. Für die optimale, koordinierte Steuerung kommt daher üblicherweise eine Kombination von Steuerungsalgorithmen zur Anwendung. Während für die Planungsphase, also die Ermittlung des Gesamtfahrplans und der Einzelfahrpläne anhand der seitens des Netzbetreibers bereitgestellten Prognosen über den erwarteten netzseitigen Energiebedarf, vergleichsweise langsame, aber dafür genau arbeitende Algorithmen eingesetzt werden können, mit denen gleichzeitig mehrere Parameter, insbesondere auch nicht stetige Größen, optimiert werden können, steht für die kurzfristige Reaktion auf die mittels des Korrektursignals angeforderte Regelenergie die Schnelligkeit des Algorithmus vor dessen Genauigkeit. Bei dem Produkt DEMS der Anmelderin wird beispielsweise für die Planungsphase ein Optimierungsverfahren für gemischt ganzzahlige lineare Optimierung (mixed integer linear programming, MILP) eingesetzt. Das Verfahren ist mathematisch sehr anspruchsvoll und erzielt sehr gute Optimierungsergebnisse, allerdings ist es rechentechnisch derart aufwändig, dass mit einer angemessenen Rechnertechnik die für die Bereitstellung der Regelenergie geforderte, sekundenschnelle Reaktion auf ein Korrektursignal nicht dargestellt werden könnte.

Ferner ist aus der Druckschrift EP1202425A2 ein System für eine bedarfsgerechte Steuerung der Energieproduktion in einem Energieversorgungsnetz bekannt, bei dem mittels Energiemanagementsystemen die Energieproduktion mindestens eines Energieerzeugers beeinflusst wird.

Der Erfindung liegt die Aufgabe zugrunde, ein Verfahren der eingangs angegebenen Art derart weiterzuentwickeln, dass auch mit vergleichsweise leistungsschwacher Rechentechnik ausgestattete Steuereinrichtungen in einfacher Weise und möglichst kurzer Zeit auf ein Korrektursignal reagieren können, um die Betriebsweise der Energieerzeuger entsprechend anzupassen. Der Erfindung liegt auch die Aufgabe zugrunde, eine entsprechend weitergebildete Steuereinrichtung anzugeben.

Zur Lösung dieser Aufgabe wird erfindungsgemäß ein gattungsgemäßes Verfahren derart fortgebildet, dass durch die Steuereinrichtung folgende Schritte durchgeführt werden: Ermittlung einer Regelenergiemenge, die eine von allen Energieerzeugern gemeinsam bereitzustellende Energiemenge angibt, anhand des Korrektursignals, Auswahl eines ersten Energieerzeugers oder einer ersten Gruppe von Energieerzeugern und Bestimmung eines Anteils der Regelenergiemenge, der von dem ersten Energieerzeuger oder der ersten Gruppe von Energieerzeugern bereitzustellen ist, sequentielle Auswahl von weiteren Energieerzeugern oder weiteren Gruppen von Energieerzeugern und Bestimmung eines jeweiligen Anteils an der jeweils verbliebenen Höhe der Regelenergiemenge, der von dem jeweiligen weiteren Energieerzeuger oder der jeweiligen weiteren Gruppe von Energieerzeugern bereitzustellen ist, bis die Höhe der Regelenergiemenge vollständig jeweils ausgewählten Energieerzeugern zugewiesen ist, und Erzeugung von Steuersignalen für die ausgewählten Energieerzeuger, die die jeweiligen von den ausgewählten Energieerzeugern bereitzustellenden Anteile der Regelenergiemenge angeben.

Unter dem Begriff "Energieerzeuger" sind in diesem Zusammenhang generell alle elektrische Energie erzeugenden Geräte und Anlagen zu verstehen, die durch eine Steuereinrichtung eines Energiemanagementsystems separat regelbar sind. Insbesondere sollen hiermit sogenannte dezentrale Energieerzeuger mit im Vergleich zu Großkraftwerken kleinerer elektrischer Leistung gemeint sein, also z.B. Photovoltaikanlagen, Windkraftanlagen, Blockheizkraftwerke, Biogasanlagen.

Gruppen von Energieerzeugern können durch Zusammenfassung mehrerer gleichartiger Energieerzeuger zu einer gemeinsamen Einheit, z.B. mehrere Photovoltaikzellen zu einer Solaranlage oder mehrere Windräder zu einer Windenergieanlage, gebildet sein. Zu einer Gruppe können aber auch solche Energieerzeuger zusammengefasst sein, die gemeinsame Merkmale bezüglich ihrer Steuerung aufweisen, beispielsweise dahingehend, ob sie stufenlos oder stufenweise steuerbar sind (stufenweise steuerbare bzw. schaltbare Energieerzeuger werden dort häufig angetroffen, wo die Forderung besteht, dass Energieerzeuger durch Fernsteuerung auf bestimmte Leistungsstufen gedrosselt werden können, z.B. in Deutschland gemäß dem Erneuerbare Energien Gesetz (EEG)).

Unter einer "Steuereinrichtung" ist eine Datenverarbeitungseinrichtung, beispielsweise ein Controller eines Energiemanagementsystems, zu verstehen, die einerseits zum Empfang und zur Verarbeitung von Statusinformationen über den jeweiligen Zustand der Energieerzeuger und andererseits zum Aussenden von Steuerbefehlen an die Energieerzeuger eingerichtet ist. Eine Steuereinrichtung muss hierbei nicht zwangsläufig aus einem einzelnen Gerät bestehen, vielmehr können auch mehrere (auch örtlich verteilt angeordnete) Geräte als eine Steuereinrichtung zusammenwirken, solange sie zur Umsetzung eines gemeinsamen Regelkonzeptes für die Steuerung des Betriebs der Energieerzeuger eingerichtet sind.

Der Begriff "Regelenergiemenge" gibt diejenige Energiemenge an, die abweichend von der für jeden Energieerzeuger durch dessen individuelle Steuerkennlinie ("Einzelfahrplan") vorgegebene momentan zur Einspeisung ins Energieversorgungsnetz bereitgestellte Energiemenge zum Ausgleich von Schwankungen des momentanen netzseitigen Energiebedarfs bereitgestellt werden kann. Dabei kann die Regelenergiemenge abhängig von der Abweichung entweder positiv (es muss mehr Energie als geplant ins Versorgungsnetz eingespeist werden) oder negativ (es muss weniger Energie als geplant ins Versorgungsnetz eingespeist werden) sein. Die seitens des Netzbetreibers mit dem Korrektursignal angeforderte Regelenergiemenge entspricht der "bereitzustellenden Regelenergiemenge" aller Energieerzeuger gemeinsam.

Unter dem Begriff "Energiemenge" soll eine auf eine bestimmte Zeitdauer (z.B. eine Viertelstunde) bezogene Energiemenge verstanden werden. Genau genommen weist die Energiemenge damit die Einheit einer elektrischen Leistung auf. Daher können im Zusammenhang mit dem erfindungsgemäßen Verfahren und der erfindungsgemäßen Steuereinrichtung anstelle von Energiemengen auch Leistungen verwendet werden, der Begriff "Energiemenge" soll folglich beide Alternativen umfassen. Dies gilt entsprechend für sämtliche begrifflichen Zusammensetzungen, beispielsweise für die "Regelenergiemenge".

Der besondere Vorteil des erfindungsgemäßen Verfahrens besteht darin, dass hierbei keine aufwändige parallele Optimierung der Betriebsweise der Energieerzeuger durchgeführt werden muss, vielmehr wird die angeforderte Regelenergiemenge sequentiell auf die Energieerzeuger oder Gruppen von Energieerzeugern aufgeteilt. Damit ist das erfindungsgemäße Verfahren so weit vereinfacht, dass es auch mit Steuereinrichtungen mit moderater Rechenleistung in akzeptabler Zeit durchführbar ist und mit relativ einfachen programmiertechnischen Mitteln formuliert werden kann, z.B. mit der für speicherprogrammierbare Steuerungen (SPS) geeigneten Programmiersprache ST ("Structured Text") gemäß IEC-Standard IEC 61131. Beispielsweise werden Iterationen und Schleifen im Verfahrensablauf durch den sequentiellen Aufbau vollständig (oder zumindest weitgehend) vermieden. Darüber hinaus kann das Verfahren durch seinen weitgehend modularen Aufbau flexibel an die Anzahl der vorhandenen Energieerzeuger angepasst werden (hohe Skalierbarkeit).

Gemäß einer vorteilhaften Weiterbildung des erfindungsgemäßen Verfahrens ist vorgesehen, dass die Steuereinrichtung zur Ermittlung des Vorzeichens der Regelenergiemenge das Korrektursignal daraufhin untersucht, ob es eine positive oder eine negative Abweichung des aktuellen versorgungsnetzseitigen Energiebedarfs von dem geplanten versorgungsnetzseitigen Energiebedarf angibt.

Durch die Ermittlung des Vorzeichens der geforderten Regelenergiemenge anhand des Korrektursignals wird festgelegt, ob die Energieerzeuger als Reaktion auf die geänderten netzseitigen Energieanforderungen mehr oder weniger Energie als geplant zur Verfügung stellen müssen. In Abhängigkeit von dem Vorzeichen der geforderten Regelenergiemenge kann die Steuereinrichtung geeignete Energieerzeuger auswählen, um die Regelenergie in optimaler Weise bereitzustellen.

Gemäß einer ersten bevorzugten Ausführungsform des erfindungsgemäßen Verfahrens kann vorgesehen sein, dass von der Steuereinrichtung die Energieerzeuger unter Bildung einer Abfolgeliste hinsichtlich derjenigen Kosten sortiert werden, die anfallen, wenn die jeweiligen Energieerzeuger abweichend von einer anhand der Steuerkennlinie festgelegten, für jeden Energieerzeuger individuellen Steuerkennlinie betrieben werden, und die Abfolgeliste für die Auswahl des ersten Energieerzeugers oder der ersten Gruppe von Energieerzeugern und des zumindest einen weiteren Energieerzeugers oder der zumindest einen weiteren Gruppe von Energieerzeugern herangezogen wird.

Auf diese Weise können die sogenannten "Grenzkosten", also die bei einer Abweichung der einzelnen Energieerzeuger von ihrem fahrplanmäßigen Betrieb anfallenden oder eingesparten Kosten, bei der Festlegung der Betriebsweise der Energieerzeuger durch die Steuereinrichtung berücksichtigt werden. Beispielsweise können die Energieerzeuger bei einer Anforderung einer positiven Regelenergiemenge in aufsteigender Kostensortierung zur Deckung der geforderten Regelenergiemenge eingesetzt werden (also zuerst diejenigen Energieerzeuger, bei denen eine Erhöhung der Energieerzeugung mit vergleichsweise geringen Kosten verbunden ist), während sie bei einer Anforderung einer negativen Regelenergiemenge in absteigender Kostensortierung verwendet werden (also zuerst diejenigen Energieerzeuger, bei denen eine Verringerung der Energieerzeugung mit vergleichsweise hohen Kosteneinsparungen verbunden ist). Diese erste Ausführungsform eignet sich insbesondere bei variablen Grenzkosten, d.h. die Grenzkosten können einem Energieerzeuger nicht fest zugeordnet werden, sondern sind in Abhängigkeit von anderen Betriebsparametern (z.B. Art und Kosten der Primärenergie, momentane Auslastung und momentaner Wirkungsgrad des Energieerzeugers, $CO_2$-Ausstoß des Energieerzeugers usw.) der Energieerzeuger zu bestimmen. Die Sortierung der Energieerzeuger kann hierbei kontinuierlich erfolgen oder durch bestimmte Ereignisse (z.B. nach Ablauf einer bestimmten Zeit, nach Aufnahme eines neuen Energieerzeugers, als Reaktion auf eine Anforderung durch einen der Energieerzeuger usw.) ausgelöst werden.

Im Zusammenhang mit dieser ersten Ausführungsform ist gemäß einer vorteilhaften Weiterbildung des erfindungsgemäßen Verfahrens vorgesehen, dass die Steuereinrichtung die maximale insgesamt von den Energieerzeugern bereitstellbare Regelenergiemenge als Summe der jeweiligen von jedem einzelnen Energieerzeuger bereitstellbaren individuellen Regelenergiemengen bestimmt.

Anhand der auf diese Weise ermittelten Angabe über die überhaupt von den Energieerzeugern insgesamt bereitstellbaren (positiven oder negativen) Regelenergiemenge kann die Steuereinrichtung auf weitere Verfahrensabläufe einwirken, z.B. kann die Menge der von einem individuellen Energieerzeuger bereitzustellenden Regelenergiemenge in Abhängigkeit von seiner maximal bereitstellbaren Regelenergiemenge ermittelt werden oder es kann ein Fehlersignal erzeugt werden, wenn die maximal von allen Energieerzeugern bereitstellbare Regelenergiemenge nicht ausreicht, um die angeforderte Regelenergiemenge zu erreichen.

Gemäß einer weiteren vorteilhaften Weiterbildung des erfindungsgemäßen Verfahrens im Zusammenhang mit der ersten Ausführungsform kann ferner vorgesehen sein, dass die Steuereinrichtung die Steuersignale in Abhängigkeit von einem durch einen Nutzer vorgegebenen Optimierungsparameter entsprechend einer kostenoptimierten oder entsprechend einer zeitoptimierten Betriebsweise erzeugt.

Hierbei kann vorteilhaft von einem Benutzer der Steuereinrichtung (beispielsweise einem Betreiber eines virtuellen Kraftwerks, dem die Energieerzeuger angehören) vorgegeben werden, ob die Auswahl der Energieerzeuger nach Kosten- oder Zeitgesichtspunkten erfolgen soll. Hierbei ist auch eine Mischform denkbar, beispielsweise derart, dass zunächst für eine schnelle Reaktion auf ein Korrektursignal die zeitoptimierte Betriebsweise der Energieerzeuger gewählt wird, um danach auf eine kostenoptimierte Betriebsweise zu wechseln.

Konkret kann in diesem Zusammenhang beispielsweise vorgesehen sein, dass bei der kostenoptimierten Betriebsweise die Steuereinrichtung dem ersten Energieerzeuger oder der ersten Gruppe von Energieerzeugern und dem jeweiligen zumindest einen weiteren Energieerzeuger oder der jeweiligen zumindest einen weiteren Gruppe von Energieerzeugern jeweils die maximal von dem jeweiligen Energieerzeuger oder der Gruppe von Energieerzeugern bereitstellbare Energiemenge als bereitzustellenden Anteil an der Regelenergiemenge zuordnet.

Bei dieser Betriebsweise werden die Energieerzeuger bei einer positiven Regelenergieanforderung der Reihe nach, beginnend bei demjenigen Energieerzeuger mit den geringsten Grenzkosten für die Abweichung von seinem Einzelfahrplan, möglichst voll ausgelastet. Bei einer negativen Regelenergieanforderung werden entsprechend diejenigen Energieerzeuger mit den höchsten Einsparungen, möglichst komplett abgeschaltet. Dadurch werden entweder die geringsten Zusatzkosten bei der Bereitstellung positiver Regelenergie oder die größten Einsparungen bei der Bereitstellung negativer Regelenergie erreicht. Ein Nachteil dieser Betriebsweise ist, dass voll belastete bzw. komplett ausgeschaltete Energieerzeuger bei weiteren Regelenergieanforderungen nicht mehr reagieren und daher nicht mehr zur Bereitstellung von Regelenergie beitragen können.

Hinsichtlich der zeitoptimierten Betriebsweise kann hingegen vorgesehen sein, dass die Steuereinrichtung dem ersten Energieerzeuger oder der ersten Gruppe von Energieerzeugern und dem jeweiligen zumindest einen weiteren Energieerzeuger oder der jeweiligen zumindest einen weiteren Gruppe von Energieerzeugern jeweils einen Teil der maximal von dem jeweiligen Energieerzeuger oder der Gruppe von Energieerzeugern bereitstellbaren Energiemenge als bereitzustellenden Anteil an der Regelenergiemenge zuordnet, wobei zur Bestimmung dieses Teils die insgesamt benötigte Regelenergiemenge und die maximal von allen Energieerzeugern, denen noch kein Anteil der Regelenergiemenge zugeordnet worden ist, noch bereitstellbare Energiemenge herangezogen wird.

Bei dieser Betriebsweise tragen insbesondere stufenlos steuerbare Energieerzeuger nur einen Anteil ihrer individuellen bereitstellbaren Regelenergiemenge bei, so dass insgesamt eine gleichmäßige Aufteilung der Regelenergieanforderung auf die Energieerzeuger erreicht wird. Da keiner der Energieerzeuger bis zu seiner Belastungsgrenze betrieben oder komplett ausgeschaltet wird und der für jeden Energieerzeuger zu übernehmende Anteil gleichsam bereits vor der Verteilung der Regelenergiemenge auf die Energieerzeuger feststeht, können alle Energieerzeuger quasi gleichzeitig (zumindest aber sehr schnell nacheinander) auf die Regelenergieanforderung reagieren. Der Nachteil dieser Betriebsweise ist jedoch, dass auch Energieerzeuger mit vergleichsweise hohen Energieerzeugungskosten bzw. geringen Einsparungen zur Erfüllung der Regelenergieanforderung beitragen.

Gemäß einer weiteren vorteilhaften Weiterbildung des erfindungsgemäßen Verfahrens gemäß der ersten Ausführungsform ist vorgesehen, dass bei der Festlegung der von dem jeweiligen Energieerzeuger bereitzustellenden Regelenergiemenge eine für den jeweiligen Energieerzeuger spezifische Änderungsrate berücksichtigt wird, die angibt, um welchen Wert die aktuell von dem jeweiligen Energieerzeuger abgegebene Energiemenge innerhalb einer vorgegebenen Änderungszeit verändert werden kann.

Bei dieser Weiterbildung wird in vorteilhafter Weise die Tatsache berücksichtigt, dass nicht alle Energieerzeuger unmittelbar, d.h. ohne merkliche Verzögerung, ihre Betriebsweise verändern können, um eine bestimmte Regelenergiemenge bereitstellen zu können. Gemäß der beschriebenen Weiterbildung kann bei der Festlegung der einzelnen zu übernehmenden Anteile auch die Geschwindigkeit berücksichtigt werden, mit der die jeweiligen Energieerzeuger auf die Regelenergieanforderung reagieren können. Schnell reagierende Energieerzeuger können somit innerhalb des gleichen Zeitraums einen größeren Anteil der Regelenergiemenge übernehmen als vergleichbare langsam reagierende Energieerzeuger.

Gemäß einer zweiten bevorzugten Ausführungsform des erfindungsgemäßen Verfahrens ist vorgesehen, dass die Energieerzeuger in eine erste Gruppe von Energieerzeugern, die stufenweise regelbar sind, und eine zweite Gruppe von Energieerzeugern, die stufenlos regelbar sind, aufgeteilt werden, für jede der beiden Gruppen die maximal von den Energieerzeugern der jeweiligen Gruppe bereitstellbare Energiemenge bestimmt wird, die Regelenergiemenge gemäß einer Vorverteilung den beiden Gruppen zugewiesen wird, der der ersten Gruppe zugewiesene Anteil der Regelenergiemenge soweit möglich auf die einzelnen Energieerzeuger der ersten Gruppe verteilt wird, wobei ein verbleibender Rest, der nicht auf die Energieerzeuger der ersten Gruppe verteilbar ist, zu demjenigen Anteil der Regelenergiemenge, der der zweiten Gruppe zugewiesen ist, addiert wird, und der aus der Addition resultierende Anteil der Regelenergiemenge auf die einzelnen Energieerzeugern der zweiten Gruppe verteilt wird.

Diese zweite Ausführungsform eignet sich insbesondere dann, wenn für die Energieerzeuger eine quasi statische Verteilung der Energieerzeugungskosten angenommen werden kann, da dann eine Reihenfolge bei der Auswahl der Energieerzeuger fest vorgegeben werden kann. Der besondere Vorteil dieser Ausführungsform ist, dass sie vollkommen ohne Schleifen ausgeführt werden kann, da zunächst ein durch die Vorauswahl getroffener Anteil der Regelenergieanforderung auf die stufenweise steuerbaren Energieerzeuger verteilt wird und erst danach ein etwaiger nicht durch die stufenlos steuerbaren Energieerzeuger abdeckbarer Rest dieses Anteils gemeinsam mit dem in der Vorauswahl für stufenlos steuerbare Energieerzeuger getroffenen Anteil der Regelenergieanforderung durch die stufenlos steuerbaren Energieerzeuger übernommen wird. Durch diese vorteilhafte Abarbeitungsreihenfolge - zunächst die stufenweise steuerbaren, danach die stufenlos steuerbaren Energieerzeuger - kann in einem Durchlauf des Verfahrens die komplette Regelenergieanforderung auf die Energieerzeuger verteilt werden. Gleichzeitig findet eine möglichst gleichmäßige Auslastung der beiden Gruppen von Energieerzeugern statt.

Hinsichtlich dieser zweiten Ausführungsform kann gemäß einer vorteilhaften Weiterbildung vorgesehen sein, dass bei der Vorverteilung der der jeweiligen Gruppe zugewiesene Anteil der Regelenergiemenge proportional zur von der jeweiligen Gruppe insgesamt maximal bereitstellbaren Energiemenge gewählt wird.

Auf diese Weise wird einerseits eine gleichmäßige Auslastung der beiden Gruppen gewährleistet, während andererseits keiner der beiden Gruppen ein Anteil der Regelenergiemenge zugewiesen wird, der deren Möglichkeiten zur Bereitstellung von Regelenergie übersteigt.

Eine weitere vorteilhafte Weiterbildung sieht bezüglich der zweiten Ausführungsform vor, dass die Verteilung der der jeweiligen Gruppe zugewiesenen Anteile der Regelenergiemenge auf die einzelnen Energieerzeuger der jeweiligen Gruppe derart erfolgt, dass bei einer positiven bereitstellenden Regelenergiemenge solche Energieerzeuger bevorzugt ausgewählt werden, bei denen eine Erhöhung der Energieerzeugung im Vergleich zu anderen Energieerzeugern derselben Gruppe geringere Kosten erzeugt, und bei einer negativen bereitstellenden Regelenergiemenge solche Energieerzeuger bevorzugt ausgewählt werden, bei denen eine Verringerung der Energieerzeugung im Vergleich zu anderen Energieerzeugern derselben Gruppe höhere Kosten einspart.

Diese Weiterbildung des Verfahrens gemäß der zweiten Ausführungsform erlaubt einen kostenoptimierten Einsatz der Energieerzeuger unter der Voraussetzung, dass die Kostensituation statisch ist, d.h. die kostenbezogene Rangordnung der Energieerzeuger ändert sich nicht im Verlauf der Zeit.

Eine weitere vorteilhafte Weiterbildung des erfindungsgemäßen Verfahrens gemäß der zweiten Ausführungsform sieht zudem vor, dass bei der Festlegung des von dem jeweiligen Energieerzeuger bereitzustellenden Regelenergiemenge eine für den jeweiligen Energieerzeuger spezifische Änderungsrate berücksichtigt wird, die angibt, um welchen Wert die aktuell von dem jeweiligen Energieerzeuger abgegebene Energiemenge innerhalb einer vorgegebenen Änderungszeit verändert werden kann.

Bei dieser Weiterbildung wird in Entsprechung zur ersten Ausführungsform die Tatsache unterschiedlicher Reaktionsgeschwindigkeiten der einzelnen Energieerzeuger auf ein eine Änderung ihrer Betriebsweise anforderndes Steuersignal berücksichtigt.

Die oben genannte Aufgabe wird auch durch eine Steuereinrichtung zur Steuerung des Betriebs von elektrischen Energieerzeugern gelöst, die zur Einspeisung elektrischer Energie mit einem elektrischen Energieversorgungsnetz verbindbar sind und deren Betriebsweise über die Steuereinrichtung steuerbar ist, wobei die Steuereinrichtung zur Steuerung der Energieerzeuger unter Heranziehung einer festgelegten Steuerkennlinie derart eingerichtet ist, dass die von den Energieerzeugern in das Versorgungsnetz eingespeiste Energie dem geplanten versorgungsnetzseitigen Energiebedarf entspricht, und die Steuereinrichtung dazu eingerichtet ist, als Reaktion auf den Empfang eines Korrektursignals, das eine Abweichung des aktuellen versorgungsnetzseitigen Energiebedarfs von dem geplanten versorgungsnetzseitigen Energiebedarf angibt, Steuersignale an die Energieerzeuger abzugeben.

Erfindungsgemäß ist vorgesehen, dass die Steuereinrichtung aufweist: Mittel zur Ermittlung einer Regelenergiemenge, die eine von allen Energieerzeugern gemeinsam bereitzustellende Energiemenge angibt, anhand des Korrektursignals, Mittel zur Auswahl eines ersten Energieerzeugers oder einer ersten Gruppe von Energieerzeugern und Bestimmung eines Anteils der Regelenergiemenge, der von dem ersten Energieerzeuger oder der ersten Gruppe von Energieerzeugern bereitzustellen ist, Mittel zur sequentiellen Auswahl von weiteren Energieerzeugern oder weiteren Gruppen von Energieerzeugern und Bestimmung eines jeweiligen Anteils an der jeweils verbliebenen Höhe der Regelenergiemenge, der von dem jeweiligen weiteren Energieerzeuger oder der jeweiligen weiteren Gruppe von Energieerzeugern bereitzustellen ist, bis die Höhe der Regelenergiemenge vollständig jeweils ausgewählten Energieerzeugern zugewiesen ist, und Mittel zur Erzeugung von Steuersignalen für die ausgewählten Energieerzeuger, die die jeweiligen von den ausgewählten Energieerzeugern bereitzustellenden Anteile der Regelenergiemenge angeben.

Hinsichtlich der Vorteile der erfindungsgemäßen Steuereinrichtung wird auf die hinsichtlich des erfindungsgemäßen Verfahrens gemachten Ausführungen verwiesen. Da die erfindungsgemäße Steuereinrichtung darüber hinaus zur Durchführung eines Verfahrens sowie seiner vorteilhaften Weiterbildungen geeignet ist, gelten alle hinsichtlich des Verfahrens gemachten Ausführungen in entsprechender Weise auch für die Steuereinrichtung.

Die Erfindung wird im Folgenden anhand von Ausführungsbeispielen eingehender erläutert. Hierzu zeigen

Figur 1   eine schematische Ansicht eines Teils eines elektrischen Energieversorgungsnetzes mit einer Anzahl elektrischer Energieverbraucher und Energieerzeuger;

Figur 2   ein schematisches Ablaufschema eines ersten Ausführungsbeispiels eines Verfahrens zur Steuerung des Betriebs von elektrischen Energieerzeugern; und

Figur 3   ein schematisches Ablaufschema eines zweiten Ausführungsbeispiels eines Verfahrens zur Steuerung des Betriebs von elektrischen Energieerzeugern.

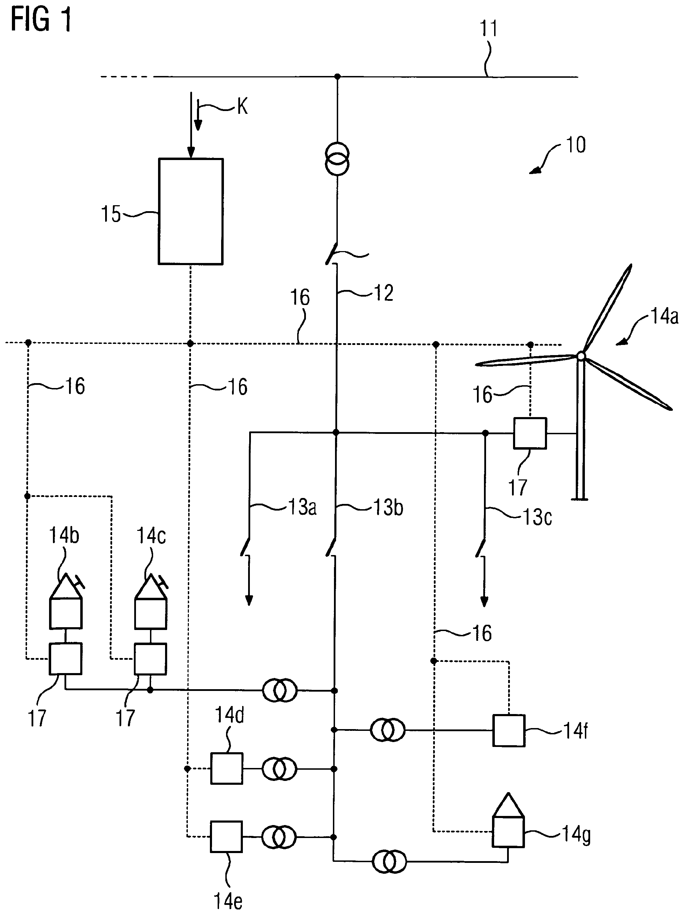

Figur 1 zeigt in schematischer Ansicht einen Teil 10 eines ansonsten nicht näher dargestellten Energieversorgungsnetzes. Von einer Sammelschiene 11 geht eine Abzweigleitung 12 ab, die sich wiederum in mehrere Zweigleitungen 13a-c aufteilt, von denen in Figur 1 nur die Abzweigleitung 13b näher dargestellt ist. An die Abzweigleitung 12 und die Zweigleitung 13b sind mehrere Energieerzeuger 14a-g angeschlossen. Die Energieerzeuger 14a-g stehen in Figur 1 beispielhaft für eine beliebige Anzahl elektrischer Energieerzeuger, deren Betriebsweise über eine gemeinsame Steuereinrichtung 15 gesteuert wird. Konkret kann es sich bei dem Energieerzeuger 14a beispielsweise um eine Windkraftanlage, bei den Energieerzeugern 14b und 14c um auf Wohnhäusern installierte Photovoltaikanlagen, bei dem Energieerzeuger 14g um ein Blockheizkraftwerk und bei den Energieerzeugern 14d-f um beliebige weitere Energieerzeuger, beispielsweise Biogasanlagen, kleine Verbrennungskraftanlagen oder Mikroturbinen handeln. Solche im Vergleich zu zentralen Großkraftwerksanlagen dezentral im Energieversorgungsnetz verteilten Energieerzeuger weisen üblicherweise eine deutlich geringere elektrische Leistungsfähigkeit auf und sind daher zur gemeinsamen Steuerung und Vermarktung ihrer elektrischen Energie über Kommunikationsverbindungen 16, die drahtlos oder drahtgebunden ausgeführt sein können, an die gemeinsame Steuereinrichtung 15 angeschlossen. Energieerzeuger, die einen integrierten Controller aufweisen, im vorliegenden Beispiel die Energieerzeuger 14d-g, sind über diesen direkt mit der Steuereinrichtung verbunden; Energieerzeuger ohne integrierten Controller können über separate Controller 17 angeschlossen werden. Einen solchen Verbund von Energieerzeugern bezeichnet man üblicherweise auch als virtuelles Kraftwerk. Die gemeinsame Steuereinrichtung 15 kann hierbei beispielsweise eine Datenverarbeitungseinrichtung eines Energiemanagementsystems sein.

Die Aufgabe der Steuereinrichtung 15 ist es, eine mit dem Betreiber des Energieversorgungsnetzes ausgehandelte Steuerkennlinie bzw. einen "Gesamtfahrplan" des virtuellen Kraftwerks in individuelle Steuerkennlinien bzw. "Einzelfahrpläne" aufzuteilen, die jedem Energieerzeuger 14a-g individuell zugewiesen werden. Bei der Steuerung im "Normalbetrieb" folgen die einzelnen Energieerzeuger 14a-g ihrem vorgegebenen Einzelfahrplan, so dass das virtuelle Kraftwerk insgesamt gegenüber dem Energieversorgungsnetz den Gesamtfahrplan einhält.

Üblicherweise kann ein im Voraus geplanter Netzbetrieb nicht vollständig eingehalten werden; unvorhergesehene Spitzen oder Senken im Verbrauch führen daher oftmals zu Abweichungen vom geplanten netzseitigen Energiebedarf. Für solche Fälle werden seitens der mit dem Energieversorgungsnetz verbundenen Energieerzeuger Regelenergiereserven bereitgehalten, die zur Kompensation solcher Abweichungen eingesetzt werden können. Die Abweichungen können dabei sowohl in positiver als auch in negativer Richtung auftreten.

Liegt ein Bedarf an Regelenergie vor, so übermittelt der Netzbetreiber an die Steuereinrichtung 15 ein Korrektursignal K, das einerseits das Vorliegen eines Bedarfs an Regelenergie anzeigt und andererseits die Menge und das Vorzeichen der benötigten Regelenergie angibt. An die Steuereinrichtung 15 wird in diesem Fall die Anforderung gestellt, dass sie innerhalb von Sekunden reagiert, so dass sich die angeforderte Regelenergiemenge innerhalb kurzer Zeit, üblicherweise innerhalb von wenigen Minuten, tatsächlich in vollem Umfang in einer entsprechenden Änderung der Einspeisung in das Energieversorgungsnetz auswirkt. Das Einspeisen von Regelenergie ist also ein Vorgang, der durch das Korrektursignal K angefordert wird, der dem normalen Gesamtfahrplan überlagert ist und innerhalb eines kurzen Zeithorizontes ausgeführt werden muss. Dazu muss die Steuereinrichtung 15 die durch das Korrektursignal angeforderte Regelenergiemenge in geeigneter Weise auf die Energieerzeuger 14a-g verteilen.

Während bei der Planungsphase, also der Festlegung des Gesamtfahrplans des virtuellen Kraftwerks ausreichend Zeit für eine aufwändige Optimierung besteht, muss die Verarbeitung des Korrektursignals quasi in Echtzeit erfolgen. Bei Steuereinrichtungen mit moderater Rechenleistung, z.B. basierend auf speicherprogrammierbaren Steuerungen, besteht häufig nicht die Möglichkeit, zur optimalen Verteilung dieselben Algorithmen wie in der Planungsphase anzuwenden. Es besteht daher die Notwendigkeit, für die kurzfristige Reaktion auf ein Korrektursignal K einen Algorithmus anzugeben, der auch mit Steuereinrichtungen mit moderater Rechenleistung in akzeptabler Zeit ausgeführt werden kann und der trotzdem eine möglichst optimale, d.h. bestimmte vorgegebene Gesichtspunkte einhaltende, Steuerung der Energieerzeuger 14a-g ermöglicht.

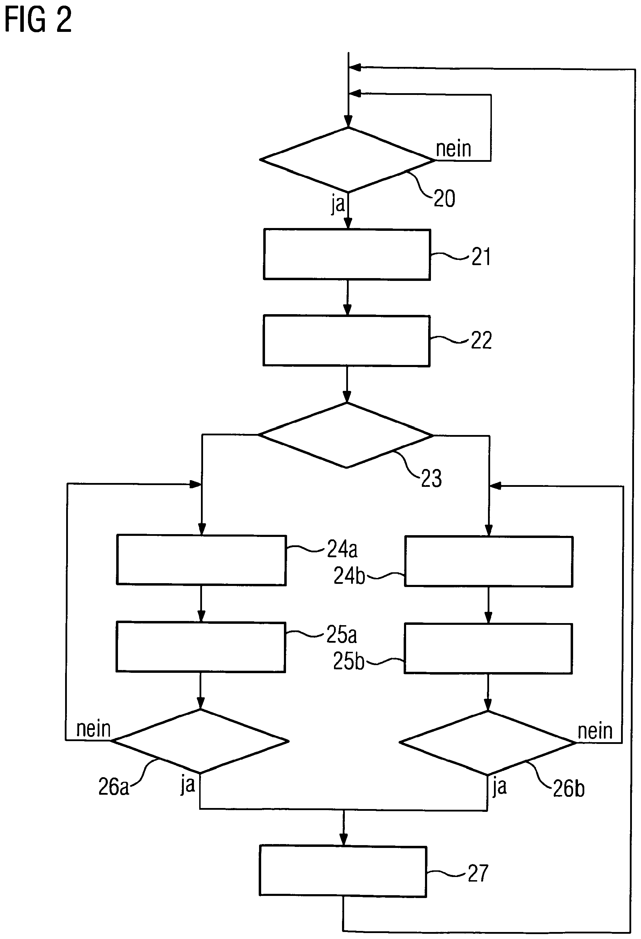

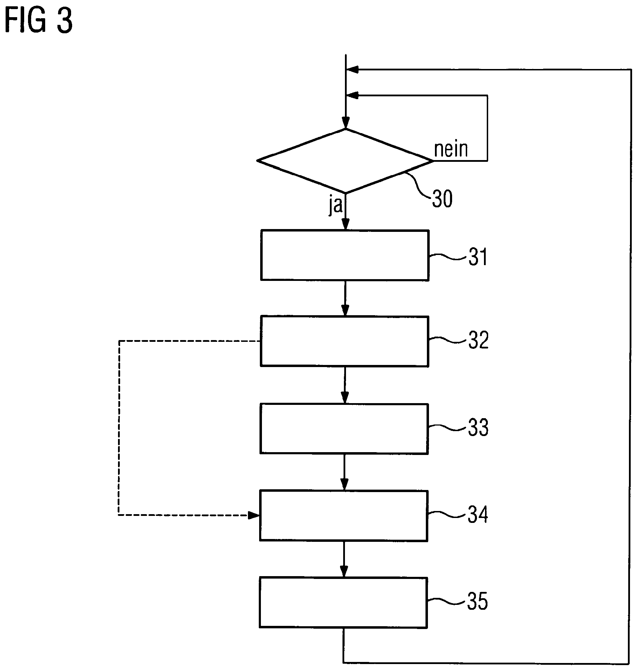

Zwei Beispiele solcher Algorithmen werden nachfolgend anhand der Figuren 2 und 3 näher erläutert. Üblicherweise liegen solche Algorithmen als Gerätesoftware vor und werden von der Steuereinrichtung während ihres Betriebs abgearbeitet.

Figur 2 zeigt ein Ablaufschema eines ersten Ausführungsbeispiels eines Verfahrens, das von der Steuereinrichtung 15 zur Steuerung des Betriebs der Energieerzeuger 14a-g in Reaktion auf ein Korrektursignal K eingesetzt werden kann.

In einem ersten Schritt 20 wird geprüft, ob ein Korrektursignal K an der Steuereinrichtung 15 ansteht. Dieser erste Schritt 20 wird so lange ausgeführt, bis das Korrektursignal K tatsächlich vorliegt. Liegt das Korrektursignal K vor, so werden in einem folgenden Schritt 21 die Energieerzeuger 14ag unter Bildung einer Abfolgeliste nach den jeweiligen Kosten sortiert, die beim Verlassen des fahrplangemäßen Betriebs des jeweiligen Energieerzeugers 14a-g entstehen. So muss beispielsweise für eine Erhöhung der von dem Blockheizkraftwerk 14g abgegebenen Energiemenge eine bestimmte Menge mehr Brennstoff eingesetzt werden, was mit Mehrkosten verbunden ist, während bei ausreichendem Wind eine Erhöhung der von der Windkraftanlage 14a abgegebenen Energiemenge mit vergleichbar geringeren Kosten einhergeht.

In einem nächsten Schritt 22 wird die maximal von allen Energieerzeugern 14a-g bereitstellbare Regelenergiemenge berechnet. Dabei wird unterschieden zwischen den Möglichkeiten zur Bereitstellung positiver Regelenergie (der Fähigkeit, mehr Energie als gemäß Fahrplan vorgesehen abzugeben) und negativer Regelenergie (der Fähigkeit, weniger Energie als gemäß Fahrplan vorgesehen abzugeben). Hierzu werden die jeweiligen Energiemengen vorzeichenrichtig zu einer gesamten bereitstellbaren Regelenergiemenge addiert.

In einem folgenden Schritt 23 wird anhand eines von dem Betreiber des virtuellen Kraftwerks vorgegebenen Optimierungsparameters eine Strategie ausgewählt, nach der die Energieerzeuger als Reaktion auf das Korrektursignal betrieben werden sollen. Einerseits kann eine kostenoptimierte Betriebsweise und andererseits eine zeitoptimierte Betriebsweise als Steuerstrategie vorgegeben sein.

Anschließend wird die Regelenergiemenge auf die die Energieerzeuger 14a-g in der aus Schritt 21 hervorgehenden sortierten Reihenfolge verteilt. Dabei können stufenlos und stufenweise steuerbare Energieerzeuger in beliebiger Mischung, nämlich gemäß der vorliegenden Sortierung, verwendet werden.

Bei Vorgabe der kostenoptimierten Betriebsweise wird das Verfahren bei Schritt 24a fortgesetzt. In Schritt 24a wird auf den ersten Energieerzeuger in der Abfolgeliste die maximal von diesem bereitstellbare Regelenergiemenge verteilt, d.h. bei einer positiven Regelenergiemenge wird der fragliche Energieerzeuger bis hin zu seiner Maximalkapazität ausgelastet, während bei einer negativen Regelenergiemenge der fragliche Energieerzeuger heruntergefahren und im Extremfall auch komplett ausgeschaltet wird. Dabei wird die Abfolgeliste in Abhängigkeit vom Vorzeichen der angeforderten Regelenergiemenge in aufsteigender oder abfallender Sortierung angewendet. Bei einer positiven angeforderten Regelenergiemenge wird die Abfolgeliste in aufsteigender Sortierung, beginnend bei demjenigen Energieerzeuger, der zu den geringsten Zusatzkosten (oder Grenzkosten) zusätzliche Regelenergie bereitstellen kann, angewendet. Bei einer negativen angeforderten Regelenergiemenge wird hingegen die Abfolgeliste in abfallender Sortierung angewendet, d.h., es wird mit demjenigen Energieerzeuger begonnen, bei dem eine Reduzierung der abgegebenen Energiemenge mit der größten Kosteneinsparung verbunden ist.

In einem folgenden Schritt 25a wird der nach der Zuweisung der maximal möglichen Regelenergiemenge zum ersten Energieerzeuger in Schritt 24a noch verbleibende Wert der angeforderten Regelenergiemenge als Differenz zwischen der ursprünglich angeforderten Regelenergiemenge und dem Anteil, der dem ersten Energieerzeuger zugewiesen worden ist, berechnet. Hierbei kann auch berücksichtigt werden, dass üblicherweise der fragliche Energieerzeuger den kompletten Wert seiner maximal bereitstellbaren Regelenergiemenge nicht unmittelbar, sondern innerhalb eines für die Regelung akzeptablen Zeitraums, z.B. 10s oder 1 min, nur zum Teil bereitstellen kann, so dass in diesem Schritt 25a von der angeforderten Regelenergiemenge wird nur der Anteil abgezogen wird, den der fragliche Energieerzeuger innerhalb des akzeptablen Zeitraums erreichen kann. Auf diesen Sachverhalt wird später im Detail eingegangen.

Im folgenden Schritt 26a wird geprüft, ob die angeforderte Regelenergiemenge bereits komplett zugewiesen worden ist, d.h., ob der in Schritt 25a berechnete verbleibende Wert gleich Null ist. Ist dies nicht der Fall, so wird das Verfahren erneut bei Schritt 24a fortgesetzt, wobei hier der in der Abfolgeliste nächstfolgende Energieerzeuger zur Zuweisung von Regelenergie ausgewählt wird. Die Schleife mit den Schritten 24a-26a wird daraufhin so lange ausgeführt, bis die Prüfung in Schritt 26a ergibt, dass die gesamte angeforderte Regelenergiemenge auf die ausgewählten Energieerzeuger verteilt worden ist.

In diesem Fall wird das Verfahren mit Schritt 27 abgeschlossen, in dem die entsprechenden Steuersignale für die ausgewählten Energieerzeuger generiert werden, die eine Angabe über den von dem jeweiligen ausgewählten Energieerzeuger beizutragenden Anteil an der Regelenergiemenge umfassen. Die Steuersignale werden danach an die entsprechenden Energieerzeuger übermittelt und dort umgesetzt.

Bei Vorgabe der zeitoptimierten Betriebsweise wird das Verfahren nach Schritt 23 bei Schritt 24b fortgesetzt. In Schritt 24b wird auf den ersten Energieerzeuger in der Abfolgeliste lediglich ein Teil der maximal von diesem bereitstellbaren Regelenergiemenge verteilt. Dieser Teil wird durch Erzeugung eines Beitragsfaktors ermittelt, der als Quotient aus der angeforderten Regelenergiemenge und der noch bereitstellbaren Menge an Regelenergie durch diejenigen Energieerzeuger, denen bisher noch keine Regelenergie zur Übernahme zugewiesen worden ist, berechnet wird. Anfänglich besitzt diese noch bereitstellbare Menge an Regelenergie den in Schritt 22 berechneten maximalen Wert, danach nimmt sie jeweils den in Schritt 25b (siehe nachfolgende Erläuterungen) berechneten Wert an. Der auf diese Weise ermittelte Beitragsfaktor nimmt üblicherweise (sofern die angeforderte Regelenergie nicht die Kapazität der Energieerzeuger zur Bereitstellung von Regelenergie übersteigt) einen Wert zwischen Null und 1 an und wird mit dem Wert des seitens der aktuell in Schritt 24b ausgewählten Energieerzeugers bereitstellbaren Regelenergiemenge multipliziert und somit der von dem fraglichen Energieerzeuger bereitzustellende Anteil der Regelergiemenge festgelegt. Bei einer positiven Regelenergiemenge wird der fragliche Energieerzeuger folglich um diesen berechneten Anteil seiner Reserve an Regelenergie mehr ausgelastet, während bei einer negativen Regelenergiemenge der fragliche Energieerzeuger um den entsprechenden Anteil heruntergefahren wird. Dabei wird die Abfolgeliste in Abhängigkeit vom Vorzeichen der angeforderten Regelenergiemenge in aufsteigender oder abfallender Sortierung angewendet. Bei einer positiven angeforderten Regelenergiemenge wird die Abfolgeliste in aufsteigender Sortierung, beginnend bei demjenigen Energieerzeuger, der zu den geringsten Zusatzkosten (oder Grenzkosten) zusätzliche Regelenergie bereitstellen kann, angewendet. Bei einer negativen angeforderten Regelenergiemenge wird hingegen die Abfolgeliste in abfallender Sortierung angewendet, d.h., es wird mit demjenigen Energieerzeuger begonnen, bei dem eine Reduzierung der abgegebenen Energiemenge mit der größten Kosteneinsparung verbunden ist.

In einem folgenden Schritt 25b wird der nach der Zuweisung des berechneten Anteils der Regelenergiemenge zum ersten Energieerzeuger in Schritt 24b noch verbleibende Wert der angeforderten Regelenergiemenge als Differenz zwischen der ursprünglich angeforderten Regelenergiemenge und dem Anteil, der dem ersten Energieerzeuger zugewiesen worden ist, berechnet.

Im folgenden Schritt 26b wird geprüft, ob die angeforderte Regelenergiemenge bereits komplett zugewiesen worden ist, d.h., ob der in Schritt 25b berechnete verbleibende Wert gleich Null ist. Ist dies nicht der Fall, so wird das Verfahren erneut bei Schritt 24b fortgesetzt, wobei hier der in der Abfolgeliste nächstfolgende Energieerzeuger zur Zuweisung von Regelenergie ausgewählt wird. Die Schleife mit den Schritten 24b-26b wird daraufhin so lange ausgeführt, bis die Prüfung in Schritt 26b ergibt, dass die gesamte angeforderte Regelenergiemenge auf die ausgewählten Energieerzeuger verteilt worden ist.

In diesem Fall wird das Verfahren mit Schritt 27 abgeschlossen, in dem die entsprechenden Steuersignale für die ausgewählten Energieerzeuger generiert werden, die eine Angabe über den von dem jeweiligen ausgewählten Energieerzeuger beizutragenden Anteil an der Regelenergiemenge umfassen. Die Steuersignale werden danach an die entsprechenden Energieerzeuger übermittelt und dort umgesetzt.

Nach Schritt 27 beginnt das Verfahren erneut bei Schritt 20, in welchem auf ein neues Korrektursignal gewartet wird.

In Abweichung zum oben beschriebenen Verfahren können die Steuersignale für beide Betriebsweisen auch jeweils direkt nach der Zuweisung des jeweiligen zu übernehmenden Anteils an den jeweils ausgewählten Energieerzeuger, also unmittelbar nach Schritt 24a bzw. 24b, generiert und übermittelt werden.

Bei der kostenoptimierten Betriebsweise trägt der jeweilige ausgewählte Energieerzeuger das mögliche Maximum aus seiner Reserve an Regelenergie zur Deckung der Regelenergieanforderung Anforderung bei. Dadurch erreicht man die kostengünstigste Betriebsweise des virtuellen Kraftwerks, die allerdings diejenigen Energieerzeuger, die günstige Energie bereitstellen können, an ihre Leistungsgrenzen treibt. Bei der zeitoptimierten Betriebsweise trägt jeder Energieerzeuger nur einen Anteil seiner Reserve bei, der dem Verhältnis der Anforderung und der gesamten noch verfügbaren Reserve entspricht. Da bei dieser Betriebsweise jeder Energieerzeuger nur einen gewissen Anteil der Anforderung übernimmt, ist keiner der Energieerzeuger bis zur Kapazitätsgrenze ausgelastet (oder bei negativer Regelenergieanforderung komplett ausgeschaltet) und hält auch für weitere Regelenergieanforderungen zusätzliche Kapazitäten bereit.

Grundsätzlich besteht auch die Möglichkeit einer Mischform aus beiden Optimierungsansätzen: Hierbei kann zuerst die zeitoptimierte Betriebsweise eingesetzt werden, um eine schnelle Reaktion auf die Regelenergieanforderung zu gewährleisten. Nach Bereitstellung der geforderten Regelenergiemenge kann durch Ersetzen "teurer" Energieerzeuger durch "günstige" Energieerzeuger auf einen kostenoptimierten Betrieb übergegangen werden.

Figur 3 zeigt ein Ablaufschema eines zweiten Ausführungsbeispiels eines Verfahrens, das von der Steuereinrichtung 15 zur Steuerung des Betriebs der Energieerzeuger 14a-g in Reaktion auf ein Korrektursignal K eingesetzt werden kann.

Im ersten Schritt 30 wird das Vorliegen eines Korrektursignals K geprüft. Dieser Schritt 30 wird so lange ausgeführt, bis tatsächlich durch ein Korrektursignal K eine Anforderung an Regelenergie angezeigt wird. In diesem Fall wird das Verfahren beim folgenden Schritt 31 fortgesetzt.

In Schritt 31 wird zunächst für eine erste Gruppe von Energieerzeugern, die alle stufenweise steuerbaren Energieerzeuger umfasst, die maximal durch alle Energieerzeuger dieser ersten Gruppe bereitstellbare Regelenergiemenge berechnet. Ebenfalls in Schritt 31 wird die für eine zweite Gruppe von Energieerzeugern, die alle stufenlos steuerbaren Energieerzeuger umfasst, die maximal durch alle Energieerzeuger dieser zweiten Gruppe bereitstellbare Regelenergiemenge berechnet. Dabei kann die Berechnung für die beiden Gruppen in beliebiger Reihenfolge nacheinander oder auch parallel zueinander ausgeführt werden.

Bei der Berechnung der maximal bereitstellbaren Regelenergiemenge durch die Energieerzeuger der beiden Gruppen gemäß Schritt 31 wird wie auch bei der ersten Ausführungsform des Verfahrens (vergleiche die Ausführungen zu Figur 2) unterschieden zwischen einer positiven Regelenergieanforderung und einer negativen Regelenergieanforderung. Weiter werden wie erläutert die maximal bereitstellbaren Regelenergiemengen von stufenweise steuerbaren Energieerzeugern einerseits und von stufenlos steuerbaren Energieerzeugern andererseits getrennt berechnet.

Nachfolgend sei ein Beispiel zur Berechnung der maximal bereitstellbaren Regelenergiemenge erläutert, das in entsprechender Weise auch für Schritte 22 und 25a/b des ersten Ausführungsbeispiels gemäß Figur 2 angewendet werden kann (für das erste Ausführungsbeispiel werden jedoch die maximal bereitstellbaren Regelenergiemengen nicht getrennt nach stufenweise und stufenlos steuerbaren Energieerzeugern berechnet).

Mit $P_{sched}$ sei die von einem Energieerzeuger laut seinem Einzelfahrplan geforderte Einspeiseenergiemenge in der aktuellen Viertelstunde bezeichnet. $P_{max}$ bezeichne die maximale Einspeiseenergiemenge, die dieser Energieerzeuger in der aktuellen Viertelstunde erbringen kann, während $P_{min}$ für die minimale Einspeiseenergiemenge, die dieser Energieerzeuger in der aktuellen Viertelstunde erbringen kann, stehe. $P_{max}$ und $P_{min}$ können beispielsweise aus einer Erzeugungsprognose eines Planungssystems entnommen werden. Für die Berechnung werden zudem nur solche Energieerzeuger verwendet, die überhaupt aktuell für eine Regelenergieverteilung zur Verfügung stehen. Beispielsweise werden gestörte oder in einer Wartung befindliche Energieerzeuger nicht bei der Berechnung berücksichtigt. Damit werden die maximal bereitstellbare positive Regelenergiemenge $P_{max+}$ und die maximal bereitstellbare negative Regelenergiemenge $P_{max-}$ eines Energieerzeugers anhand der Formeln

$$P_{max+} = P_{max} - P_{sched} \text{ bzw.}$$

$$P_{max-} = P_{sched} - P_{min}$$

berechnet.

Die jeweiligen individuellen maximal bereitstellbaren Regelenergiemengen der einzelnen Energieerzeuger werden nun für jede der beiden Gruppen durch Addition getrennt nach positiver und negativer Regelenergiemenge bestimmt.

Im Schritt 32 wird eine vorläufige Vorverteilung der angeforderten Regelenergiemenge auf die beiden Gruppen von Energieerzeugern vorgenommen. Diese Vorverteilung kann beispielsweise so ausgeführt sein, dass die Aufteilung anteilig auf Basis der für die beiden Gruppen berechneten maximal bereitstellbaren Regelenergiemengen geschieht, d.h., dass die Regelenergieanforderung ungefähr proportional zu der in der jeweiligen Gruppe vorhandenen gesamten Reserve an Regelenergie verteilt wird. Dadurch wird eine möglichst gleichmäßige Nutzung der einzelnen Energieerzeuger erreicht. Alternativ kann die Vorverteilung z.B. auch derart vorgenommen werden, dass die gesamte Regelenergieanforderung zunächst den stufenweise steuerbaren Energieerzeugern zugeteilt wird. Die für die zweite Gruppe der Energieerzeuger (die stufenlos steuerbaren Energieerzeuger) ermittelten Regelenergiemengen werden wie in Figur 3 durch eine gestrichelte Linie angedeutet an einen Schritt 34 übergeben (siehe unten).

In einem nächsten Schritt 33 geschieht nun die Aufteilung der für die erste Gruppe vorgesehenen Regelenergiemenge auf die in dieser Gruppe vorhandenen stufenweise schaltbaren Energieerzeuger. Der dieser Gruppe zugeteilte Anteil der Regelenergieanforderung kann wegen der Stufung der jeweiligen Generatorleistung der Energieerzeuger im Allgemeinen nicht exakt erreicht werden.

Der Restbetrag der der ersten Gruppe zugeteilten Regelenergiemenge, der nicht durch die Energieerzeuger der ersten Gruppe abgedeckt werden kann, wird an den folgenden Schritt 34 weitergegeben. In diesem Schritt 34 werden nun einerseits der aus der Vorverteilung in Schritt 32 hervorgehende Anteil für die stufenlos steuerbaren Energieerzeuger und andererseits der in Schritt 33 verbleibende Restanteil der stufenweise steuerbaren Energieerzeuger addiert und die resultierende Regelenergiemenge auf die einzelnen stufenlos steuerbaren Energieerzeuger der zweiten Gruppe verteilt.

Die Aufteilung der verbleibenden Regelenergieanforderung auf die stufenlos steuerbaren Energieerzeuger erfolgt vorzugsweise so, dass jeder Energieerzeuger den gleichen Anteil seiner Reserve an Regelenergie beiträgt. Dadurch werden die Energieerzeuger gleichmäßig ausgelastet und es werden nicht einzelne Energieerzeuger an die Grenzen ihrer Leistungsfähigkeit gebracht. Die maximale Regelgeschwindigkeit des virtuellen Kraftwerks als Ganzes bleibt erhalten.

Für die Auswahl der jeweils innerhalb der Gruppen zu verwendenden Energieerzeuger kann - wie auch beim ersten Ausführungsbeispiel - eine nach den Grenzkosten der Energieerzeuger in jeder Gruppe sortierte Abfolgeliste verwendet werden. Diese Abfolgeliste kann je nach Vorzeichen der Regelenergieanforderung in aufsteigender oder abfallender Reihenfolge abgearbeitet werden.

In einem abschließenden Schritt 35 werden die entsprechenden Steuersignale für die einzelnen Energieerzeuger generiert und an diese übertragen. Wie bereits zur ersten Ausführungsform erläutert kann die Generierung und Übertragung von Steuersignalen auch jeweils unmittelbar nach der Festlegung des jeweils von dem einzelnen Energieerzeuger zu übernehmenden Anteils erfolgen.

Nachfolgend wird eine mögliche Vorgehensweise zur Bestimmung der zu verwendenden Auslastung von gestuft steuerbaren Energieerzeugern beschrieben. Diese Vorgehensweise kann sowohl beim ersten als auch beim zweiten Ausführungsbeispiel des erläuterten Verfahrens zum Steuern des Betriebs von Energieerzeugern eingesetzt werden. Jeder Leistungsstufe eines stufenweise steuerbaren Energieerzeugers wird hierbei ein Steuerbaustein zugeordnet. Ein Energieerzeuger, der nur einstufig ein- oder ausgeschaltet werden kann, ist in diesem Zusammenhang ein Spezialfall eines stufenweise steuerbaren Energieerzeugers. Eine Leistungsstufe eines Energieerzeugers kann nur dann eingeschaltet werden, wenn die niedrigeren Leistungsstufen bereits eingeschaltet sind. Ebenso kann eine Leistungsstufe nur dann ausgeschaltet werden, wenn die höheren Leistungsstufen bereits ausgeschaltet sind. Deswegen werden die einzelnen Steuerbausteine bezüglich ihres Einschaltzustandes miteinander verkettet. Eine Leistungsstufe eines Energieerzeugers kann nun in einen Zustand abweichend vom durch den Einzelfahrplan des Energieerzeugers vorgegebenen Zustand geschaltet werden, um die Regelenergieanforderung zu unterstützen. Wenn die Leistungsstufe die Regelenergieanforderung unterstützt, dann bleibt von der ursprünglichen Regelenergieanforderung ein Rest übrig, der an höhere bzw. niedrigere Leistungsstufen desselben Energieerzeugers bzw. an weitere Energieerzeuger weitergegeben werden kann.

Der Steuerbaustein einer Leitungsstufe prüft zunächst, ob er durch Abweichung vom Einzelfahrplan des Energieerzeugers überhaupt einen Beitrag zur angeforderten Regelenergiemenge liefern kann bzw. darf. Hierzu wird zunächst geprüft, ob die aktuelle Leistungsstufe von den vorhergehenden Stufen freigegeben ist. Ist dies der Fall, so wird nachfolgend geprüft, ob der Energieerzeuger von seinem Einzelfahrplan abweichen darf, d.h., ob das Band zwischen prognostizierter Minimal- und Maximalleistung genügend Spielraum für eine Änderung gibt. Schließlich wird auch überprüft, ob eine Abweichung vom Einzelfahrplan, die ja nur in Stufen erfolgen kann, dazu beitragen würde, dass die angeforderte Regelenergiemenge genauer als aktuell erreicht wird.

Beispielsweise ergibt diese Prüfung auch dann ein positives Ergebnis, wenn durch eine Zuschaltung einer Leistungsstufe die angeforderte Regelenergiemenge nicht genau erreicht, sondern stattdessen sogar überschritten wird, sofern die dadurch entstehende neue Abweichung von der geforderten Regelenergiemenge kleiner als die Differenz ist, wenn die Leistungsstufe nach dem ursprünglichen Einzelfahrplan weiter betrieben würde. Ergeben diese Prüfungen ein positives Ergebnis, so wird die entsprechende Leistungsstufe ein- bzw. ausgeschaltet.

Energieerzeuger - unabhängig davon, ob sie stufenweise oder stufenlos gesteuert werden können - können auf einen veränderten Sollwert üblicherweise nicht beliebig schnell reagieren. Energieerzeuger, die für die Bereitstellung von Regelenergie eingesetzt werden, können teilweise Minuten brauchen, bis ein neuer Sollwert durch das Abfahren einer Rampe vollständig erreicht wurde. Diese Trägheit der Energieerzeuger wird üblicherweise in die Berechnung in Form einer Änderungsrate einbezogen. Statt den von einem Energieerzeuger (langfristig) maximal bereitstellbaren Beitrag an Regelenergie in vollem Umfang zu berücksichtigen, sollte daher nur der Anteil berücksichtigt werden, den der Energieerzeuger in einem angemessenen Zeitraum (z.B. 1 Minute) erbringen kann. Dadurch besteht die Möglichkeit, dass eine Regelenergieanforderung mit der geforderten Geschwindigkeit zunächst von den schnellsten Anlagen übernommen wird, um später von kostengünstigeren, aber trägen Generatoren abgelöst zu werden.

Zusammengefasst ist hiermit ein Verfahren - in zwei möglichen Ausführungsformen - beschrieben worden, das eine im Wesentlichen sequentielle Aufteilung der Regelenergieanforderung auf ausgewählte Energieerzeuger oder Gruppen von Energieerzeugern vornimmt. Hierdurch kann das Verfahren vergleichsweise einfach und unter Verwendung von Standardkomponenten (beispielsweise der Programmiersprache ST - "structured Text") implementiert und in vorteilhafter Weise auch von Steuereinrichtungen mit moderater Rechenleistung durchgeführt werden. Das Verfahren eignet sich zur Ansteuerung von stufenlos sowie stufenweise steuerbaren Energieerzeugern und erreicht durch die (dynamische oder statische) Sortierung der Energieerzeuger nach ihren Grenzkosten einen möglichst kostengünstigen Betrieb des virtuellen Kraftwerks.

**Patentansprüche**

1. Verfahren zur Steuerung des Betriebs von elektrischen Energieerzeugern (14a-g), die zur Einspeisung elektrischer Energie mit einem elektrischen Energieversorgungsnetz verbunden sind und deren Betriebsweise über eine gemeinsame Steuereinrichtung (15) gesteuert wird, wobei

   - die Steuereinrichtung (15) die Energieerzeuger (14a-g) unter Heranziehung einer festgelegten Steuerkennlinie derart steuert, dass die von den Energieerzeugern (14a-g) in das Versorgungsnetz eingespeiste Energie dem geplanten versorgungsnetzseitigen Energiebedarf entspricht;

- der Steuereinrichtung (15) ein Korrektursignal (K) zugeführt wird, das eine Abweichung des aktuellen versorgungsnetzseitigen Energiebedarfs von dem geplanten versorgungsnetzseitigen Energiebedarf angibt; und

- die Steuereinrichtung (15) Steuersignale an die Energieerzeuger (14a-g) abgibt, bei deren Ermittlung das Korrektursignal (K) herangezogen wird;
wobei

durch die Steuereinrichtung (15) folgende Schritte durchgeführt werden:

- Ermittlung einer Regelenergiemenge, die eine von allen Energieerzeugern (14a-g) gemeinsam bereitzustellende Energiemenge angibt, anhand des Korrektursignals (K);
- Auswahl eines ersten Energieerzeugers oder einer ersten Gruppe von Energieerzeugern und Bestimmung eines Anteils der Regelenergiemenge, der von dem ersten Energieerzeuger oder der ersten Gruppe von Energieerzeugern bereitzustellen ist;
- sequentielle Auswahl von weiteren Energieerzeugern oder weiteren Gruppen von Energieerzeugern und Bestimmung eines jeweiligen Anteils an der jeweils verbliebenen Höhe der Regelenergiemenge, der von dem jeweiligen weiteren Energieerzeuger oder der jeweiligen weiteren Gruppe von Energieerzeugern bereitzustellen ist, bis die Höhe der Regelenergiemenge vollständig jeweils ausgewählten Energieerzeugern zugewiesen ist; und
- Erzeugung von Steuersignalen für die ausgewählten Energieerzeuger, die die jeweiligen von den ausgewählten Energieerzeugern bereitzustellenden Anteile der Regelenergiemenge angeben,

**dadurch gekennzeichnet, dass**

- die Energieerzeuger (14a-g) in eine erste Gruppe von Energieerzeugern, die stufenweise regelbar sind, und eine zweite Gruppe von Energieerzeugern, die stufenlos regelbar sind, aufgeteilt werden;
- für jede der beiden Gruppen die maximal von den Energieerzeugern der jeweiligen Gruppe bereitstellbare Energiemenge bestimmt wird;
- die Regelenergiemenge gemäß einer Vorverteilung den beiden Gruppen zugewiesen wird;

- der der ersten Gruppe zugewiesene Anteil der Regelenergiemenge soweit möglich auf die einzelnen Energieerzeuger der ersten Gruppe verteilt wird, wobei ein verbleibender Rest, der nicht auf die Energieerzeuger der ersten Gruppe verteilbar ist, zu demjenigen Anteil der Regelenergiemenge, der der zweiten Gruppe zugewiesen ist, addiert wird; und

- der aus der Addition resultierende Anteil der Regelenergiemenge auf die einzelnen Energieerzeugern der zweiten Gruppe verteilt wird.

2. Verfahren nach Anspruch 1,
**dadurch gekennzeichnet, dass**

- die Steuereinrichtung (15) zur Ermittlung des Vorzeichens der Regelenergiemenge das Korrektursignal (K) daraufhin untersucht, ob es eine positive oder eine negative Abweichung des aktuellen versorgungsnetzseitigen Energiebedarfs von dem geplanten versorgungsnetzseitigen Energiebedarf angibt.

3. Verfahren nach Anspruch 1 oder 2,
**dadurch gekennzeichnet, dass**

- von der Steuereinrichtung (15) die Energieerzeuger (14a-g) unter Bildung einer Abfolgeliste hinsichtlich derjenigen Kosten sortiert werden, die anfallen, wenn die jeweiligen Energieerzeuger (14a-g) abweichend von einer anhand der Steuerkennlinie festgelegten, für jeden Energieerzeuger (14a-g) individuellen Steuerkennlinie betrieben werden; und
- die Abfolgeliste für die Auswahl des ersten Energieerzeugers oder der ersten Gruppe von Energieerzeugern und des zumindest einen weiteren Energieerzeugers oder der zumindest einen weiteren Gruppe von Energieerzeugern herangezogen wird.

4. Verfahren nach Anspruch 3,
**dadurch gekennzeichnet, dass**

- die Steuereinrichtung (15) die maximale insgesamt von den Energieerzeugern (14a-g) bereitstellbare Regelenergiemenge als Summe der jeweiligen von jedem einzelnen Energieerzeuger (14a-g) bereitstellbaren individuellen Regelenergiemengen bestimmt.

5. Verfahren nach einem der Ansprüche 3 bis 4,
**dadurch gekennzeichnet, dass**

- die Steuereinrichtung (15) die Steuersignale in Abhängigkeit von einem durch einen Nutzer vorgegebenen Optimierungsparameter entsprechend einer kostenoptimierten oder entsprechend einer zeitoptimierten Betriebsweise erzeugt.

6. Verfahren nach Anspruch 5,
**dadurch gekennzeichnet, dass**

    - bei der kostenoptimierten Betriebsweise die Steuereinrichtung (15) dem ersten Energieerzeuger oder der ersten Gruppe von Energieerzeugern und dem jeweiligen zumindest einen weiteren Energieerzeuger oder der jeweiligen zumindest einen weiteren Gruppe von Energieerzeugern jeweils die maximal von dem jeweiligen Energieerzeuger oder der Gruppe von Energieerzeugern bereitstellbare Energiemenge als bereitzustellenden Anteil an der Regelenergiemenge zuordnet.

7. Verfahren nach Anspruch 5,
**dadurch gekennzeichnet, dass**

    - bei der zeitoptimierten Betriebsweise die Steuereinrichtung (15) dem ersten Energieerzeuger oder der ersten Gruppe von Energieerzeugern und dem jeweiligen zumindest einen weiteren Energieerzeuger oder der jeweiligen zumindest einen weiteren Gruppe von Energieerzeugern jeweils einen Teil der maximal von dem jeweiligen Energieerzeuger oder der Gruppe von Energieerzeugern bereitstellbaren Energiemenge als bereitzustellenden Anteil an der Regelenergiemenge zuordnet, wobei zur Bestimmung dieses Teils die insgesamt benötigte Regelenergiemenge und die maximal von allen Energieerzeugern, denen noch kein Anteil der Regelenergiemenge zugeordnet worden ist, noch bereitstellbare Energiemenge herangezogen wird.

8. Verfahren nach einem der Ansprüche 3 bis 7,
**dadurch gekennzeichnet, dass**

    - bei der Festlegung der von dem jeweiligen Energieerzeuger (14a-g) bereitzustellenden Regelenergiemenge eine für den jeweiligen Energieerzeuger spezifische Änderungsrate berücksichtigt wird, die angibt, um welchen Wert die aktuell von dem jeweiligen Energieerzeuger (14a-g) abgegebene Energiemenge innerhalb einer vorgegebenen Änderungszeit verändert werden kann.

9. Verfahren nach einem der vorhergehenen Ansprüche,
**dadurch gekennzeichnet, dass**

    - bei der Vorverteilung der der jeweiligen Gruppe zugewiesene Anteil der Regelenergiemenge proportional zur von der jeweiligen Gruppe insgesamt maximal bereitstellbaren Energiemenge gewählt wird.

10. Verfahren nach Anspruch 9,
**dadurch gekennzeichnet, dass**

    - die Verteilung der der jeweiligen Gruppe zugewiesenen Anteile der Regelenergiemenge auf die einzelnen Energieerzeuger der jeweiligen Gruppe derart erfolgt, dass bei einer positiven bereitzustellenden Regelenergiemenge solche Energieerzeuger bevorzugt ausgewählt werden, bei denen eine Erhöhung der Energieerzeugung im Vergleich zu anderen Energieerzeugern derselben Gruppe geringere Kosten erzeugt, und bei einer negativen bereitzustellenden Regelenergiemenge solche Energieerzeuger bevorzugt ausgewählt werden, bei denen eine Verringerung der Energieerzeugung im Vergleich zu anderen Energieerzeugern derselben Gruppe höhere Kosten einspart.

11. Verfahren nach einem der Ansprüche 9 oder 10,
**dadurch gekennzeichnet, dass**

    - bei der Festlegung des von dem jeweiligen Energieerzeuger bereitzustellenden Regelenergiemenge eine für den jeweiligen Energieerzeuger spezifische Änderungsrate berücksichtigt wird, die angibt, um welchen Wert die aktuell von dem jeweiligen Energieerzeuger abgegebene Energiemenge innerhalb einer vorgegebenen Änderungszeit verändert werden kann.

12. Steuereinrichtung (15) zur Steuerung des Betriebs von elektrischen Energieerzeugern (14a-g), die zur Einspeisung elektrischer Energie mit einem elektrischen Energieversorgungsnetz verbindbar sind und deren Betriebsweise über die Steuereinrichtung (15) steuerbar ist, wobei

    - die Steuereinrichtung (15) zur Steuerung der Energieerzeuger (14a-g) unter Heranziehung einer festgelegten Steuerkennlinie derart eingerichtet ist, dass die von den Energieerzeugern (14a-g) in das Versorgungsnetz eingespeiste Energie dem geplanten versorgungsnetzseitigen Energiebedarf entspricht; und
    - die Steuereinrichtung (15) dazu eingerichtet ist, als Reaktion auf den Empfang eines Korrektursignals (K), das eine Abweichung des aktuellen versorgungsnetzseitigen Energiebedarfs von dem geplanten versorgungsnetzseitigen Energiebedarf angibt, Steuersignale an die Energieerzeuger (14a-g) abzugeben; wobei die Steuereinrichtung (15) aufweist:
    - Mittel zur Ermittlung einer Regelenergiemenge, die eine von allen Energieerzeugern (14a-g) gemeinsam bereitzustellende Energiemenge angibt, anhand des Korrektursignals (K);

- Mittel zur Auswahl eines ersten Energieerzeugers oder einer ersten Gruppe von Energieerzeugern und Bestimmung eines Anteils der Regelenergiemenge, der von dem ersten Energieerzeuger oder der ersten Gruppe von Energieerzeugern bereitzustellen ist;

- Mittel zur sequentiellen Auswahl von weiteren Energieerzeugern oder weiteren Gruppen von Energieerzeugern und Bestimmung eines jeweiligen Anteils an der jeweils verbliebenen Höhe der Regelenergiemenge, der von dem jeweiligen weiteren Energieerzeuger oder der jeweiligen weiteren Gruppe von Energieerzeugern bereitzustellen ist, bis die Höhe der Regelenergiemenge vollständig jeweils ausgewählten Energieerzeugern zugewiesen ist; und

- Mittel zur Erzeugung von Steuersignalen für die ausgewählten Energieerzeuger, die die jeweiligen von den ausgewählten Energieerzeugern bereitzustellenden Anteile der Regelenergiemenge angeben,

**dadurch gekennzeichnet, dass**

die Steuereinrichtung (15) dazu eingerichtet ist,

- die Energieerzeuger (14a-g) in eine erste Gruppe von Energieerzeugern, die stufenweise regelbar sind, und eine zweite Gruppe von Energieerzeugern, die stufenlos regelbar sind, aufzuteilen;

- für jede der beiden Gruppen die maximal von den Energieerzeugern der jeweiligen Gruppe bereitstellbare Energiemenge zu bestimmen;

- die Regelenergiemenge gemäß einer Vorverteilung den beiden Gruppen zuzuweisen;

- den der ersten Gruppe zugewiesenen Anteil der Regelenergiemenge soweit möglich auf die einzelnen Energieerzeuger der ersten Gruppe zu verteilen, wobei ein verbleibender Rest, der nicht auf die Energieerzeuger der ersten Gruppe verteilbar ist, zu demjenigen Anteil der Regelenergiemenge, der der zweiten Gruppe zugewiesen ist, addiert wird; und

- den aus der Addition resultierenden Anteil der Regelenergiemenge auf die einzelnen Energieerzeuger der zweiten Gruppe zu verteilen.

## Claims

1.  Method for controlling the operation of electric generators (14a-g) which are connected to an electric energy supply network to feed in electric energy and of which the mode of operation is controlled via a common control device (15), wherein

    - the control device (15) controls the energy generators (14a-g) using a defined characteristic in such a way that the energy fed into the supply network by the energy generators (14a-g) matches the planned energy requirement of the supply network;

    - a correction signal (K) which indicates a deviation of the current energy requirement of the supply network from the planned energy requirement of the supply network is fed to the control device (15); and

    - the control device (15) transmits control signals to the energy generators (14a-g), the correction signal (K) being used to determine the control signals;

    wherein

    the following steps are carried out by the control device (15):

    - determining a control energy quantity which indicates an energy quantity to be provided jointly by all energy generators (14a-g), on the basis of the correction signal (K);

    - selecting a first energy generator or a first group of energy generators and determining a proportion of the control energy which is to be provided by the first energy generator or the first group of energy generators;

    - sequentially selecting further energy generators or further groups of energy generators and determining a respective proportion of the respectively remaining amount of the control energy quantity which is to be provided by the respective further energy generator or the respective further group of energy generators until the amount of the control energy is allocated completely in each case to selected energy generators; and

    - generating control signals for the selected energy generators which indicate the respective proportions of the control energy to be provided by the selected energy generators, **characterized in that**

    - the energy generators (14a-g) are divided up into a first group of energy generators which are controllable in a stepwise manner and a second group of energy generators which are controllable in a stepless manner;

    - the maximum energy quantity providable by the energy generators of the respective group is determined for each of the two groups;

    - the control energy quantity is allocated to both groups according to a pre-distribution;

    - the proportion of the control energy quantity allocated to the first group is distributed insofar as possible among the individual energy generators of the first group, wherein a remaining residual amount which is not distributable among the energy generators of the first group is added to the proportion of the control energy quantity which is allocated to the second group; and
- the proportion of the control energy quantity resulting from the addition is distributed among the individual energy generators of the second group.

2. Method according to Claim 1,
**characterized in that**

- in order to determine the sign of the control energy quantity, the control device (15) examines the correction signal (K) to determine whether it indicates a positive or negative deviation of the current energy requirement of the supply network from the planned energy requirement of the supply network.

3. Method according to Claim 1 or 2,
**characterized in that**

- the energy generators (14a-g) are sorted by the control device (15) with the formation of a sequence list relating to the costs incurred if the respective energy generators (14a-g) are operated deviating from a control characteristic specific to each energy generator (14a-g) defined on the basis of the control characteristic; and
- the sequence list is used in order to select the first energy generator or the first group of energy generators and the at least one further energy generator or the at least one further group of energy generators.

4. Method according to Claim 3,
**characterized in that**

- the control device (15) defines the maximum control energy quantity providable in total by the energy generators (14a-g) as the sum of the respective individual control energy quantities providable by each individual energy generator (14a-g).

5. Method according to one of Claims 3 to 4,
**characterized in that**

- the control device (15) generates the control signals depending on an optimization parameter specified by a user according to a cost-optimized or according to a time-optimized mode of operation.

6. Method according to Claim 5,
**characterized in that**

- in the case of the cost-optimized mode of operation, the control device (15) in each case allocates the maximum energy quantity providable by the respective energy generator or the group of energy generators to the first energy generator or the first group of energy generators and the respective at least one further energy generator or the respective at least one further group of energy generators as the proportion of the control energy quantity to be provided.

7. Method according to Claim 5,
**characterized in that**

- in the case of the time-optimized mode of operation, the control device (15) in each case allocates a part of the maximum energy quantity providable by the respective energy generator or the group of energy generators to the first energy generator or the first group of energy generators and to the respective at least one further energy generator or the respective at least one further group of energy generators as the proportion of the control energy quantity to be provided, wherein the total required control energy quantity and the maximum energy quantity still providable by all energy generators to which no proportion of the control energy quantity has yet been allocated are used to determine this part.

8. Method according to one of Claims 3 to 7,
**characterized in that**

- a change rate specific to the respective energy generator, which indicates the value by which the energy quantity currently output by the respective energy generator (14a-g) can be changed within a predefined change time, is taken into account when the control energy quantity to be provided by the respective energy generator (14a-g) is defined.

9. Method according to one of the preceding claims,
**characterized in that**

- in the pre-distribution, the proportion of the control energy quantity allocated to the respective group is selected proportionally to the maximum energy providable in total by the respective group.

10. Method according to Claim 9,
**characterized in that**

- the proportions of the control energy quantity allocated to the respective group are allocated among the individual energy generators of the respective group in such a way that, in the case of a positive control energy quantity to be provided, those energy generators are preferentially selected in the case of which an increase in the energy generation in comparison with other energy generators of the same group incurs lower costs, and, in the case of a negative control energy quantity to be provided, those energy generators are preferentially selected in the case of which a reduction in the energy generation in comparison with other energy generators of the same group achieves higher cost savings.

**11.** Method according to either of claims 9 and 10, **characterized in that**

- a change rate specific to the respective energy generator, which indicates the value by which the energy quantity currently output by the respective energy generator can be changed within a predefined change time, is taken into account when the control energy quantity to be provided by the respective energy generator is defined.

**12.** Control device (15) for controlling the operation of electric energy generators (14a-g) which are connectable to an electric energy supply network to feed in electric energy and of which the mode of operation is controllable via the control device (15), wherein

- the control device (15) is configured to control the energy generators (14a-g) on the basis of a defined control characteristic in such a way that the energy fed by the energy generators (14a-g) into the supply network matches the planned energy requirement of the supply network; and
- the control device (15) is configured to transmit control signals to the energy generators (14a-g) in response to the reception of a correction signal (K) indicating a deviation of the current energy requirement of the supply network from the planned energy requirement of the supply network;

wherein the control device (15) has:

- means for determining a control energy quantity indicating an energy quantity to be provided jointly by all energy generators (14a-g), on the basis of the correction signal;
- means for selecting a first energy generator or a first group of energy generators and for determining a proportion of the control energy which is to be provided by the first energy generator or the first group of energy generators;
- means for sequentially selecting further energy generators or further groups of energy generators and for determining a respective proportion of the respectively remaining amount of the control energy quantity which is to be provided by the respective further energy generator or the respective further group of energy generators until the amount of the control energy is allocated completely in each case to selected energy generators; and

- means for generating control signals for the selected energy generators which indicate the respective proportions of the control energy to be provided by the selected energy generators, **characterized in that**
- the control device (15) is configured to divide up the energy generators (14a-g) into a first group of energy generators which are controllable in a stepwise manner and a second group of energy generators which are controllable in a stepless manner;
- determine the maximum energy quantity providable by the energy generators of the respective group for each of the two groups;
- allocate the control energy quantity to both groups according to a pre-distribution;
- distribute the proportion of the control energy quantity allocated to the first group insofar as possible among the individual energy generators of the first group, wherein a remaining residual amount which is not distributable among the energy generators of the first group is added to the proportion of the control energy quantity which is allocated to the second group; and
- distribute the proportion of the control energy quantity resulting from the addition among the individual energy generators of the second group.

## Revendications

**1.** Procédé de commande du fonctionnement de générateurs (14a-g) d'énergie électrique, qui, pour l'injection d'énergie électrique, sont reliés à un réseau d'alimentation en énergie électrique et dont on commande le mode de fonctionnement par un dispositif (15) de commande commun, dans lequel

- le dispositif (15) de commande commande les générateurs (14a-g) d'énergie en tirant parti d'une courbe caractéristique de commande fixée de manière à ce que l'énergie injectée dans le réseau d'alimentation par les générateurs (14a-g) d'énergie corresponde au besoin d'énergie planifié du côté du réseau d'alimentation ;
- on envoie, au dispositif (15) de commande, un signal (K) de correction, qui indique un écart du besoin d'énergie instantané du côté du réseau d'alimentation au besoin d'énergie planifié du côté du réseau d'alimentation et

- le dispositif (15) de commande envoie des signaux de commande aux générateurs (14a-g) d'énergie dans la détermination desquels le signal (K) de correction prend part ;
dans lequel

on effectue, par le dispositif (15) de commande, les stades suivants :

- détermination d'une quantité d'énergie de réglage, qui, à l'aide du signal (K) de correction, indique une quantité d'énergie à mettre à disposition en commun par tous les générateurs (14a-g) d'énergie ;
- choix d'un premier générateur d'énergie ou d'un premier groupe de générateurs d'énergie et détermination d'une proportion de la quantité d'énergie de réglage, qui doit être mise à disposition par le premier générateur d'énergie ou le premier groupe de générateurs d'énergie ;
- choix séquentiel d'autres générateurs d'énergie ou d'autres groupes de générateurs d'énergie et détermination d'une proportion respective au niveau restant respectivement de la quantité d'énergie de réglage, qui doit être mise à disposition par l'autre générateur d'énergie ou par l'autre groupe de générateurs d'énergie, jusqu'à ce que le niveau de la quantité d'énergie de réglage soit attribué complètement aux générateurs d'énergie choisis et
- production de signaux de commande des générateurs d'énergie choisis, qui indiquent les proportions, à mettre à disposition par les générateurs d'énergie choisis, de la quantité d'énergie de réglage,
**caractérisé en ce que**
- on répartit les générateurs (14a-g) d'énergie en un premier groupe de générateurs d'énergie, qui sont réglables par palier, et en un deuxième groupe de générateurs d'énergie, qui sont réglables sans palier ;
- pour chacun des deux groupes, on détermine la quantité d'énergie pouvant être mise à disposition au maximum par les générateurs d'énergie du groupe ;
- on affecte la quantité d'énergie de réglage aux deux groupes suivant une répartition préalable ;
- on répartit la proportion, affectée au premier groupe, de la quantité d'énergie de réglage autant que possible entre les divers générateurs d'énergie du premier groupe, un reste subsistant, qui ne peut pas être réparti entre les générateurs d'énergie du premier groupe, étant additionné à la proportion de la quantité d'énergie de réglage, qui est affectée au deuxième groupe et
- on répartit la proportion, résultant de l'addition, de la quantité d'énergie de réglage entre les divers générateurs d'énergie du deuxième groupe.

2. Procédé suivant la revendication 1,
**caractérisé en ce que**

- le dispositif (15) de commande étudie, pour la détermination du signe de la quantité d'énergie de réglage, le signal (K) de correction sur le point de savoir s'il indique un écart positif ou un écart négatif du besoin d'énergie instantané du côté du réseau d'alimentation au besoin d'énergie planifié du côté du réseau d'alimentation.

3. Procédé suivant la revendication 1 ou 2,
**caractérisé en ce que**

- on trie, par le dispositif (5) de commande, les générateurs (14a-g) d'énergie en formant une liste ordonnée en ce qui concerne les coûts, qui se produisent lorsque l'on fait fonctionner les générateurs (14a-g) d'énergie en s'écartant d'une courbe caractéristique individuelle de commande, fixée à l'aide de la courbe caractéristique de commande et individuelle à chaque générateur (14a-g) d'énergie et
- on tire parti de la liste ordonnée pour le choix du premier générateur d'énergie ou du premier groupe de générateurs d'énergie et du au moins un autre générateur d'énergie ou du au moins un autre groupe de générateurs d'énergie.

4. Procédé suivant la revendication 3,
**caractérisé en ce que**

- le dispositif (15) de commande détermine la quantité d'énergie de réglage pouvant être mise à disposition en tout par les générateurs (14a-g) d'énergie sous la forme de la somme des quantités d'énergie individuelles de réglage pouvant être mises à disposition par chaque générateur (14a-g) d'énergie individuelle.

5. Procédé suivant l'une des revendications 3 à 4,
**caractérisé en ce que**

- le dispositif (15) de commande produit les signaux de commande en fonction d'un paramètre d'optimisation donné à l'avance par un utilisateur conformément à un mode de fonctionnement optimisé en coût ou à un mode de fonctionnement optimisé en temps.

6. Procédé suivant la revendication 5,
**caractérisé en ce que**

- dans le mode de fonctionnement optimisé en coût, le dispositif (15) de commande affecte, comme proportion à mettre à disposition de quantité d'énergie de réglage, au premier générateur d'énergie ou au premier groupe de générateurs d'énergie et au moins un autre générateur d'énergie ou au au moins un autre groupe de générateurs d'énergie, respectivement la quantité d'énergie pouvant être mise à disposition au maximum par le générateur d'énergie respectif ou par le groupe de générateurs d'énergie.

7.  Procédé suivant la revendication 5,
    **caractérisé en ce que**

    - dans le mode de fonctionnement optimisé en temps, le dispositif (15) de commande affecte, comme proportion à mettre à disposition de la quantité d'énergie de réglage, au premier générateur d'énergie ou au premier groupe de générateurs d'énergie et au moins à un autre générateur d'énergie ou au au moins un autre groupe de générateurs d'énergie, respectivement une partie de la quantité d'énergie pouvant être mise à disposition au maximum par le générateur d'énergie respectif ou par le groupe de générateurs d'énergie, dans lequel, pour déterminer cette proportion, on tire parti de la quantité d'énergie de réglage nécessaire en tout et de la quantité d'énergie pouvant être mise encore à disposition au maximum par tous les générateurs d'énergie, auxquels il n'a pas encore été affecté de proportion de quantité d'énergie de réglage.

8.  Procédé suivant l'une des revendications 3 à 7,
    **caractérisé en ce que**

    - dans la fixation de la quantité d'énergie de réglage à mettre à disposition par le générateur (14a-g) d'énergie respectif, on tient compte, pour le générateur d'énergie respectif, de taux de variation spécifique qui indique de quelle valeur la quantité d'énergie cédée présentement par le générateur (14a-g) d'énergie respectif peut être modifiée dans un temps de variation donné à l'avance.

9.  Procédé suivant l'une des revendications précédentes,
    **caractérisé en ce que**

    - **en ce que**, dans la répartition préalable de la proportion, affectée à chaque groupe, de la quantité d'énergie de réglage, on choisit proportionnellement à la quantité d'énergie pouvant être mise à disposition au maximum par le groupe respectif.

10. Procédé suivant la revendication 9,
    **caractérisé en ce que**

    - la répartition des proportions, affectées au groupe respectif, de la quantité d'énergie de réglage entre les divers générateurs d'énergie du groupe respectif s'effectue de manière à ce que, pour une quantité d'énergie de réglage à mettre à disposition positive, on choisit, de préférence, des générateurs d'énergie, pour lesquels une augmentation de la production d'énergie donne, par rapport à d'autres producteurs d'énergie du même groupe, des coûts plus bas et, pour une quantité d'énergie de réglage à mettre à disposition négative, on choisit, de préférence, des producteurs d'énergie, pour lesquels une diminution de la production d'énergie permet de faire l'économie de coûts plus hauts par rapport à d'autres générateurs d'énergie du même groupe.

11. Procédé suivant l'une des revendications 9 ou 10,
    **caractérisé en ce que**

    - dans la fixation de la quantité d'énergie de réglage à mettre à disposition par le générateur d'énergie respectif, on tient compte d'un taux de variations spécifique aux générateurs d'énergie respectifs, qui indique combien la quantité d'énergie cédée présentement par le générateur d'énergie respectif peut être modifiée dans un temps de variation donné à l'avance.

12. Dispositif (15) de commande pour commander le fonctionnement de générateurs (14a-g) d'énergie électrique, qui, pour l'injection d'énergie électrique, peuvent être reliés à un réseau d'alimentation en énergie électrique et dont le mode de fonctionnement peut être commandé par le dispositif (15) de commande, dans lequel :

    - le dispositif (15) de commande est conçu pour commander les générateurs (14a-g) d'énergie en tirant parti d'une courbe caractéristique de commande fixée de manière à ce que l'énergie injectée par les générateurs (14a-g) d'énergie dans le réseau d'alimentation corresponde au besoin d'énergie planifié du côté du réseau d'alimentation et
    - le dispositif (15) de commande est conçu pour envoyer, en réaction à la réception d'un signal (K) de correction, qui indique un écart du besoin d'énergie présent du côté du réseau d'alimentation au besoin d'énergie planifié du côté du réseau d'alimentation, des signaux de commande aux générateurs (14a-g) d'énergie, le dispositif (15) de commande ayant :
    - des moyens de détermination d'une quantité

**EP 2 904 679 B1**

d'énergie de réglage, qui, à l'aide du signal (K) de correction, indique une quantité d'énergie à mettre à disposition en commun par tous les générateurs (14a-g) d'énergie ;

- des moyens de choix d'un premier générateur d'énergie ou d'un premier groupe de générateurs d'énergie et de détermination d'une proportion de la quantité d'énergie de réglage à mettre à disposition par le premier générateur d'énergie ou par le premier groupe de générateurs d'énergie ;

- des moyens de choix séquentiel d'autres générateurs d'énergie ou d'autres groupes de générateurs d'énergie et de détermination d'une proportion respective du niveau restant de la quantité d'énergie de réglage à mettre à disposition par l'autre générateur d'énergie ou par l'autre groupe de générateur d'énergie, jusqu'à ce que le niveau de la quantité d'énergie de réglage soit affecté complètement au générateur d'énergie choisi et

- des moyens de production de signaux de commande des générateurs d'énergie choisis, qui indiquent les proportions, à mettre à disposition respectivement par les générateurs d'énergie choisis, de la quantité d'énergie de réglage, **caractérisé en ce que**

le dispositif (15) de commande est conçu pour :

- répartir les générateurs (14a-g) d'énergie en un premier groupe de générateurs d'énergie, qui sont réglables par palier, et en un deuxième groupe de générateurs d'énergie qui sont réglables sans palier ;

- déterminer pour chacun des deux groupes la quantité d'énergie pouvant être mise à disposition au maximum par les générateurs d'énergie du groupe respectif ;

- affecter aux deux groupes la quantité d'énergie et de réglage suivant une répartition préalable ;

- répartir la proportion, affectée au premier groupe, de l'énergie de réglage autant que possible entre les divers générateurs d'énergie du premier groupe, un reste subsistant, qui ne peut pas être réparti entre les générateurs d'énergie du premier groupe, étant additionné à la proportion de la quantité d'énergie de réglage, qui est affectée au deuxième groupe et

- répartir la proportion résultant de l'addition, de la quantité d'énergie de réglage entre les divers générateurs d'énergie du deuxième groupe.

FIG 1

# FIG 2

FIG 3

**IN DER BESCHREIBUNG AUFGEFÜHRTE DOKUMENTE**

**In der Beschreibung aufgeführte Patentdokumente**

- EP 1202425 A2